# EUROPEAN PATENT APPLICATION

(11) **EP 2 993 897 A1**
(43) Date of publication of application: **09.03.2016**
(21) Application number: 15155362.5
(22) Date of filing: 17.02.2015
(51) Int. Cl.: H04N 5/76, H04N 9/79, H04N 21/426

(54) **Digital video recorder and video recording and playback method thereof**

(30) Priority: 05.09.2014 TW 103130822
(71) Applicant: Icatch Inc, Taipei City (TW)
(72) Inventor: Ren-Hao, Hsu, Taipei City, Taiwan, R.O.C. (TW)
(74) Representative: Pons Ariño, Angel

(57) **Abstract**

A digital video recorder and a video recording and playback method thereof are provided. The digital video recorder includes a first decoding module, a second decoding module, and a video processing module. The first and the second decoding modules decode a video signal into a first image signal and a second image signal. A first command signal is produced when the first image signal is correct, and a second command is produced when the second image signal is correct. The video processing module selectively outputs the first image signal or the second image signal according to the first and the second command.

## Description

### TECHNICAL FIELD

The disclosure relates to a digital video recorder and a video recording and playback method thereof, more particularly to a digital video recorder and a video recording and playback method thereof, which employ multiple decoding modules with different signal formats to synchronously decode a video signal.

### BACKGROUND

A digital video recorder (DVR) is mainly applied in a surveillance system in order to receive video signals from multiple video cameras, decode the video signals into digital image signals, and store the digital image signals in a storage device or display the digital image signals on a displayer.

These video signals may have different formats, such as standard-definition (SD) analog signals or high-definition (HD) serial digital interface (SDI) signals. When the digital video recorder receives a video signal, the digital video recorder has to select one suitable format corresponding to the format of the video signal to decode the video signal. However, digital video recorders nowadays support only one video format. In order to support multi-format decoding, many digital video recorders respectively supporting different video formats are required. This will cause a complex connection line structure and a high cost.

### SUMMARY

According to one or more embodiments, the disclosure provides a digital video recording and playback method. In one embodiment, the digital video recording and playback method includes the following steps. Decode a video signal into a first image signal by a first format, and generate a first command signal when the first image signal is correct. Decode the video signal into a second image signal by a second format, and generate a second command signal when the second image signal is correct. Selectively output the first image signal or the second image signal according to the first command signal or the second command signal.

In another embodiment, a digital video recording and playback method includes the following steps. Decode a video signal by a first format, and generate a first image signal when the video signal is decoded correctly. Decode the video signal by a second format, and generate a second image signal when the video signal is decoded correctly. Output the first image signal or the second image signal.

According to one or more embodiments, the disclosure provides a digital video recorder. In one embodiment, the digital video recorder includes a first decoding module, a second decoding module, and a video processing module. The first decoding module decodes a video signal into a first image signal by a first format, and generates a first command signal when the first image signal is correct. The second decoding module decodes the video signal into a second image signal by a second format, and generates a second command signal when the second image signal is correct. The video processing module receives the first image signal and the second image signal and selectively outputs the first image signal or the second image signal according to the first command signal or the second command signal.

In another embodiment, a digital video recorder includes a first decoding module, a second decoding module, and a video processing module. The first decoding module decodes a video signal by a first format, and generates a first image signal when the video signal is decoded correctly. The second decoding module decodes the video signal by a second format, and generates a second image signal when the video signal is decoded correctly. The video processing module is coupled with the first decoding module and the second decoding module and receives and outputs the first image signal or the second image signal.

In view of the one or more aforementioned embodiments, after receiving a video signal, the digital video recorder simultaneously sends the video signal to multiple decoding modules each having its own signal format, and these decoding modules simultaneously decode the video signal. Since the decoding modules can automatically determine whether the video signal is decoded correctly, and generates the command signal presenting the correct decoding or outputs only the image signal under the correct decoding, the digital video recorder can successfully decode the video signal without trial and error. Moreover, the image receiving module can directly connect to the first decoding module and the second decoding module without any switches, and the first decoding module and the second decoding module can also connect to the video processing module without switches. Therefore, the circuit of the digital video recorder may be simplified, the cost during the manufacture may reduce, and signals may be prevented from interference.

### BRIEF DESCRIPTION OF THE DRAWINGS

The present disclosure will become more fully understood from the detailed description given herein below for illustration only, and thus does not limit the present disclosure, wherein:
FIG. 1 is a block diagram of an embodiment of a digital video recorder in the disclosure;
FIG. 2 is a flow chart of an embodiment of a digital video recording and playback method applied to the digital video recorder in FIG. 1;
FIG. 3 is a block diagram of another embodiment of a digital video recorder in the disclosure;
FIG. 4 is a flow chart of another embodiment of a digital video recording and playback method applied to the digital video recorder in FIG. 3; and
FIG. 5 is a block diagram of other embodiment of a digital video recorder in the disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawings.

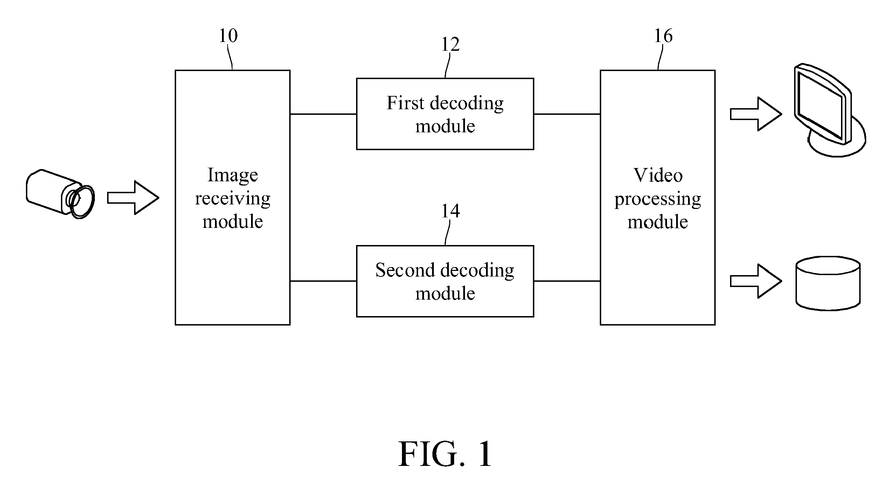

FIG. 1 is a block diagram of an embodiment of a digital video recorder in the disclosure. The digital video recorder includes, for example, an image receiving module 10, a first decoding module 12, a second decoding module 14, and a video processing module 16. The image receiving module 10 is coupled with the first decoding module 12 and the second decoding module 14, and the first decoding module 12 and the second decoding module 14 are coupled with the video processing module 16.

The image receiving module 10 connects to multiple video signal sources to receive video signals and transfers the received video signals to the first decoding module 12 and the second decoding module 14. The first decoding module 12 and the second decoding module 14 decode the video signals and send at least one of the decoding results to the video processing module 16. The video processing module 16 outputs one of the decoding results to external devices.

The image receiving module 10 wiredly or wirelessly receives the video signal from an external device such as a multi-system operator (MSO), an Internet protocol (IP) camera, a surveillance camera or other possible devices.

The first decoding module 12 decodes the video signal into a first image signal by a first format. When the first image signal is correct, the first decoding module 12 generates a first command signal. For example, the first decoding module 12 operates under a high-definition serial digital interface (HD-SDI) as the first format, and can decode high-definition digital signals. When the video signal is a high-definition digital signal, the first decoding module 12 can correctly decode the video signal into the first command signal.

The second decoding module 14 decodes the video signal into a second image signal by a second format. When the second image signal is correct, the second decoding module 14 generates a second command signal. For example, the second decoding module 14 can be a decoder under an analog high definition (AHD) as the second format. Such a decoder decodes a standard-definition analog signal and a high-definition analog signal received by the image receiving module 10. When the video signal received by the second decoding module 14 matches a standard-definition analog signal format or a high-definition analog signal format, the second decoding module 14 can perform signal decoding correctly to correctly generate the second image signal and the second command signal.

The video processing module 16 receives the first image signal from the first decoding module 12 and the second image signal from the second decoding module 14 and outputs the first image signal or the second image signal according to the first command signal or the second command signal. The video processing module 16 is coupled with an external image storage device (e.g. a hard disk drive or the like) or an external image display device (e.g. a television, a displayer, or the like). After the first decoding module 12 and the second decoding module 14 decode the video signal, the video processing module 16 sends the first image signal or the second image signal to the external image storage device or the image display device. The operation of the digital video recorder is described as follows.

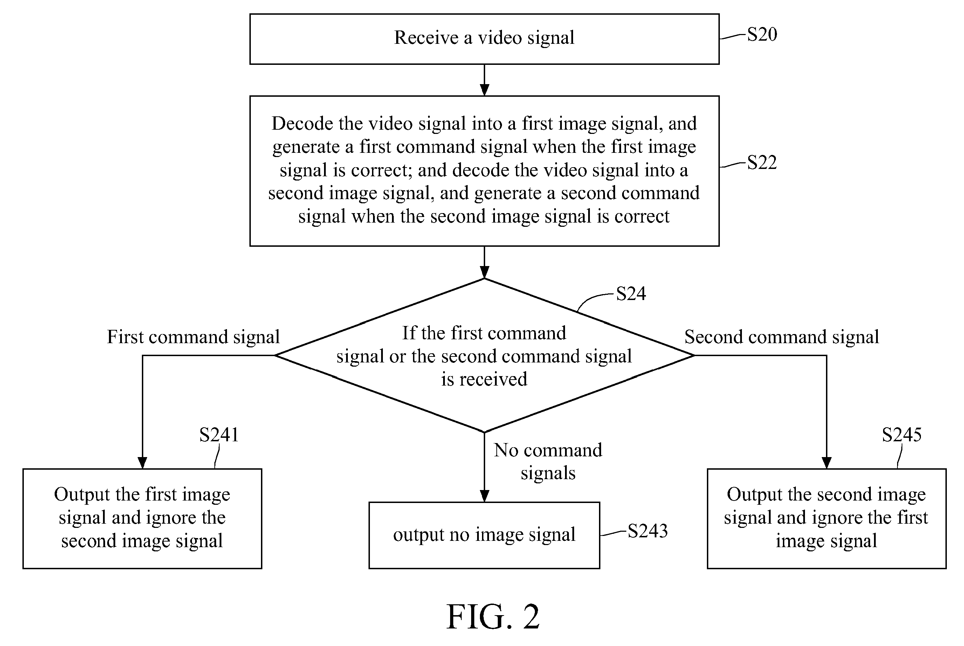

FIG. 2 is a flow chart of an embodiment of a digital video recording and playback method applied to the digital video recorder in FIG. 1. The digital video recording and playback method includes the following steps. In step S20, the image receiving module 10 receives a video signal from an external device. In step S22, decode the video signal into a first image signal. When the first image signal is correct, a first command signal is generated. Moreover, decode the video signal into a second image signal. When the second image signal is correct, a second command signal is generated. In this embodiment or some embodiments, the digital video recording and playback method further employs a first signal detection unit to determine whether the first image signal is correct, after the video signal is decoded into the first image signal in step S22. When the first image signal is correct, the first signal detection unit generates the first command signal.

In step S24, according to the first command signal or the second command signal, selectively output the first image signal or the second image signal. In practice, the first decoding module 12 sends the first image signal and the first command signal during the correct decoding to the video processing module 16. The second decoding module 14 also sends the second image signal and the second command signal during the correct decoding to the video processing module 16. The video processing module 16 receives the first image signal, the second image signal, the first command signal, and the second command signal and selectively outputs the first image signal or the second image signal according to the first command signal or the second command signal.

In step S241, when the video processing module 16 receives the first command signal, the video processing module 16 outputs the first image signal to the external image storage device or the image display device. Alternately, in step S245, when receiving the second command signal, the video processing module 16 outputs the second image signal to the external image storage device or the image display device. In step S243, when receiving neither the first command signal nor the second command signal, the video processing module 16 will not output any image signal to the external image display device or the external image storage device, or will output an error message to the external image display device, but the disclosure will not be limited thereto.

When the image receiving module 10 receives a video signal whose format has not been determined yet, the image receiving module 10 sends the video signal to the first decoding module 12 and the second decoding module 14. The first decoding module 12 and the second decoding module 14 can simultaneously decode the video signal. Therefore, the time to determine the format of the video signal format may reduce, or the trail and error time wasted on decoding the video signal using one format by one format may be saved.

For example, the first decoding module 12 is a high-definition digital signal decoder, and the second decoding module 14 is a high-definition analog signal decoder. In this case, when an analog video signal is received by the digital video recorder, the image receiving module 10 will not determine the format of the video signal first but directly transfers the video signal whose format has not been determined, to the first decoding module 12 and the second decoding module 14. When the first decoding module 12 decodes the video signal, since the first decoding module 12 cannot correctly decode the video signal, the first decoding module 12 will generate a first image signal that is wrong. When decoding the video signal, the second decoding module 14 can generate a second image signal that is correct, and a second command signal. Both the first decoding module 12 and the second decoding module 14 send the first image signal, the second image signal, and the second command signal to the video processing module 16. When receiving the second command signal, the video processing module 16 outputs the second image signal to an external image storage device or an external image display device but ignores the first image signal.

In the disclosure, the aforementioned first command signal presents that the first image signal is correct, and the aforementioned second command signal presents that the second image signal is correct. Alternately, the aforementioned first command signal presents that the first image signal is wrong, and the aforementioned second command signal presents that the second image signal is wrong.

In this or some embodiments, when the first image signal or the second image signal is correct, at least one of the first command signal and the second command signal is generated. Alternately, when the first image signal or the second image signal is wrong, at least one of the first command signal and the second command signal is generated. For example, when the first image signal is correct but the second image signal is wrong, the first decoding module 12 generates the first command signal presenting that the video signal is decoded correctly and the second decoding module 14 generates the second command signal presenting that the video is decoded incorrectly. Alternately, when the first image signal is correct, only the first decoding module 12 generates the first command signal presenting that the video signal is decoded correctly but the second decoding module 14 does not generate the second command signal. Otherwise, when the second image signal is correct but the first image signal is wrong in an example, the first decoding module 12 generates the first command signal presenting that the video signal is decoded incorrectly and the second decoding module 14 generates the second command signal presenting that the video is decoded correctly. Alternately, when the second image signal is correct but the first image signal is wrong in an example, the first decoding module 12 does not generate the first command signal and the second decoding module 14 generates the second command signal presenting that the video is decoded correctly. In this way, other examples related to the generation of the first and second command signals can be deduced by analogy and will not be repeated hereinafter.

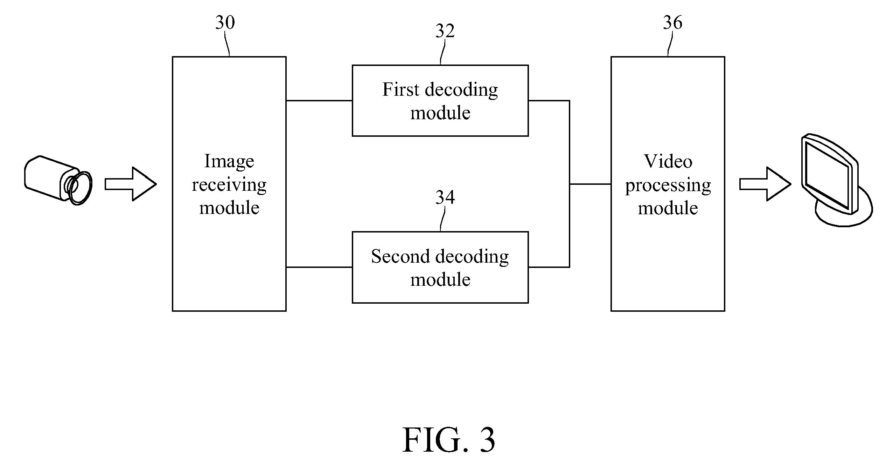

FIG. 3 is a block diagram of another embodiment of a digital video recorder in the disclosure. The digital video recorder includes, for example, an image receiving module 30, a first decoding module 32, a second decoding module 34, and a video processing module 36. The image receiving module 30 is similar to the image receiving module 10 in FIG. 1 and thus, will not be repeated hereinafter. However, compared with the embodiment in FIG. 1, the first decoding module 32 and the second decoding module 34 in FIG. 3 not only are coupled with the video processing module 36 but also are coupled together.

The first decoding module 32 decodes a video signal by a first format. When the first decoding module 32 can decode the video signal by the first format, the first decoding module 32 generates a first image signal. For example, as the first decoding module 32 is a high-definition digital signal decoder, the first format is an encoding format for high-definition digital signals. When the encoding format for high-definition digital signals is employed to decode the video signal that is a high-definition digital signal, it indicates that the first decoding module 32 can correctly decode the video signal into the first image signal.

The second decoding module 34 decodes the video signal by a second format. When the second decoding module 34 can correctly decode the video signal, the second decoding module 34 generates a second image signal. For example, the second format is an encoding format for high-definition analog signals.

The video processing module 36 is coupled with the first decoding module 32 and the second decoding module 34 and receives the first image signal or the second image signal. Furthermore, the video processing module 36 outputs the first image signal to an external device when receiving the first image signal, or outputs the second image signal to the external device when receiving the second image signal.

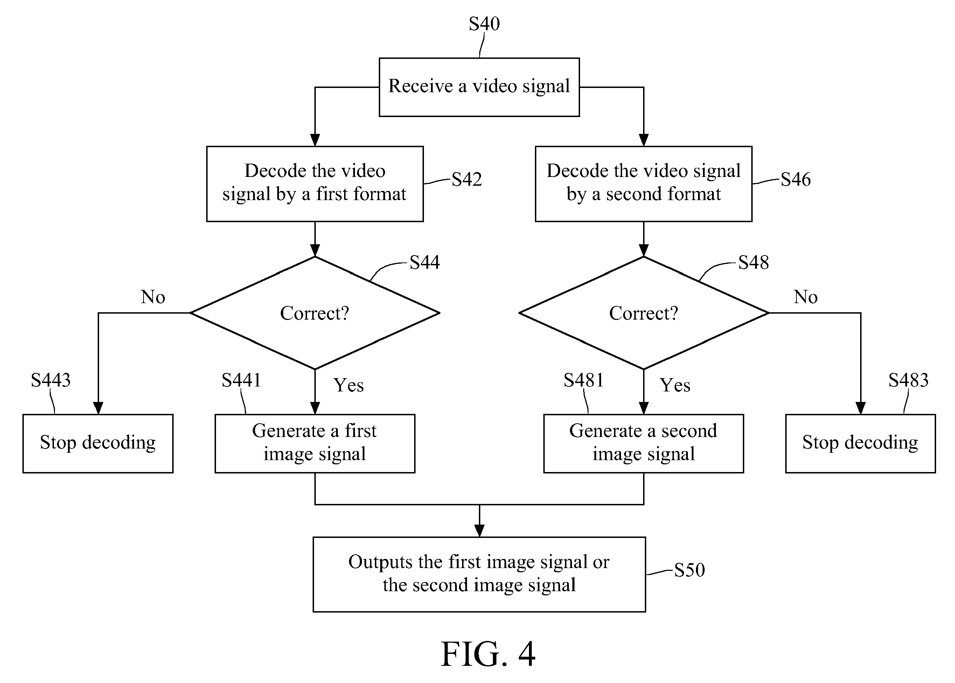

FIG. 4 is a flow chart of another embodiment of a digital video recording and playback method applied to the digital video recorder in FIG. 3. The digital video recording and playback method includes the following steps. In step S40, the image receiving module 30 receives a video signal from an external device and sends the video signal to the first decoding module 32 and the second decoding module 34.

In step S42, the first decoding module 32 decodes the video signal by a first format. In step S44, determine whether the video signal is correctly decoded by the first format. In step S441, when the video signal is correctly decoded by the first format, a first image signal is generated and sent to the video processing module 36. In step S443, when the video signal is incorrectly decoded by the first format, the first decoding module 32 stops decoding the video signal.

In step S46, the second decoding module 34 and the first decoding module 32 operate synchronously, and the second decoding module 34 decodes the video signal by a second format. In step S48, determine whether the video signal is correctly decoded by the second format. In 481, when the video signal is correctly decoded by the second format, the second decoding module 34 generates a second image signal and sends the second image signal to the video processing module 36. In step S483, when the second decoding module 34 can not decode the video signal by the second format correctly, the second decoding module 34 stops decoding the video signal.

In step S50, the video processing module 36 outputs the first image signal when receiving the first image signal, or outputs the second image signal when receiving the second image signal. In practice, the video processing module 36 outputs the first image signal or the second image signal to an external device for storing or displaying the first image signal or the second image signal.

On the other hand, in this or some embodiments, the first decoding module 32 and the second decoding module 34 can include a first signal detection unit and a second signal detection unit, respectively. The first signal detection unit checks whether the first decoding module decodes the video signal correctly, and the second detection unit checks whether the second decoding module correctly decodes the video signal. When the video signal is decoded correctly, the first image signal or the second image signal is generated and sent to the video processing module 36; otherwise, the first image signal or the second image signal will not be outputted.

For example, the first decoding module 32 is a high-definition digital signal decoder, and the second decoding module 34 is a high-definition analog signal decoder. In this case, when the digital video recorder receives a high-definition digital video signal from an external device via the image receiving module 30, the image receiving module 30 transfers the video signal to be determined to the first decoding module 32 and the second decoding module 34. Since the first decoding module 32 can correctly decode the video signal from the image receiving module 30, the first decoding module 32 decodes the video signal into a first image signal and sends the first image signal to the video processing module 36. Therefore, the video processing module 36 outputs the first image signal to an external image displayer. On the other hand, since the second decoding module 34 cannot correctly decode the video signal from the image receiving module 30, the second decoding module 34 stops decoding the video signal and will not generate a second image signal.

In this embodiment, when neither the first decoding module 32 nor the second decoding module 34 can correctly decode the video signal, it means that this video signal does not match any formats supported by the digital video recorder, whereby the digital video recorder will not display images or output error messages.

On the other hand, the digital video recorder can further include a third decoding module. The details of such a digital video recorder are described as follows by referring to FIG. 2 or FIG. 4.

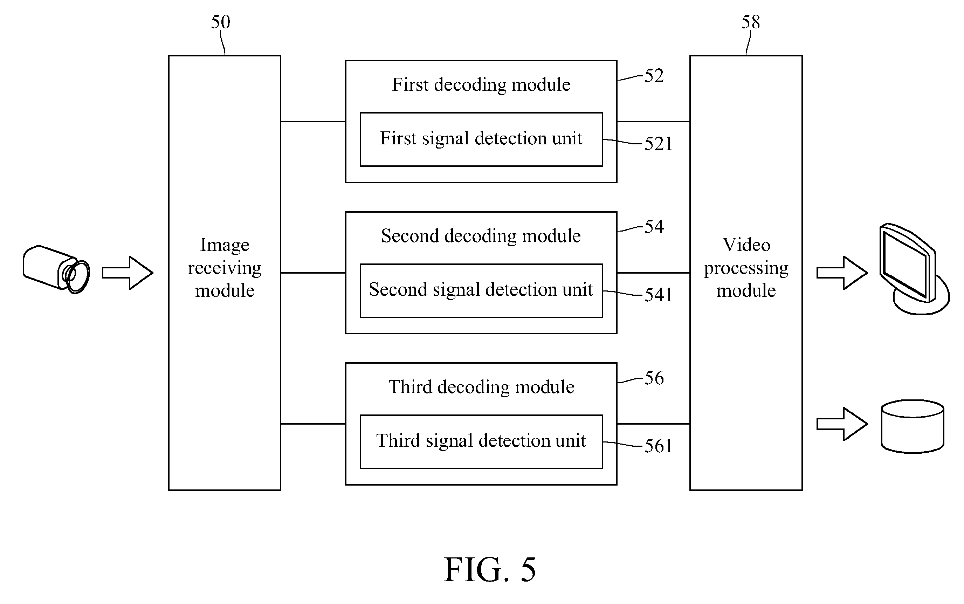

FIG. 5 is a block diagram of other embodiment of a digital video recorder in the disclosure. The digital video recorder includes, for example, an image receiving module 50, a first decoding module 52, a second decoding module 54, a third decoding module 56, and a video processing module 58. The first decoding module 52 includes a first signal detection unit 521, the second decoding module 54 includes a second signal detection unit 541, and the third decoding module 56 includes a third signal detection unit 561.

When receiving a video signal from an external device, the image receiving module 50 simultaneously sends the video signal to the first decoding module 52, the second decoding module 54, and the third decoding module 56. After the first decoding module 52, the second decoding module 54, and the third decoding module 56 synchronously receive the video signal, the first decoding module 52 decodes the video signal into a first image signal, the second decoding module 54 decodes the video signal into a second image signal, and the third decoding module 56 decodes the video signal into a third image signal.

When the first image signal is correct, the first decoding module 52 generates a first command signal. When the second image signal is correct, the second decoding module 54 generates a second command signal. When the third image signal is correct, the third decoding module 56 generates a third command signal.

The video processing module 58 receives the first image signal, the second image signal, and the third image signal and receives the first command signal, the second command signal, or the third command signal, in order to output the first image signal, the second image signal, or the third image signal according to the first command signal, the second command signal, or the third command signal. When receiving the first command signal, the video processing module 58 outputs the first image signal to an external image storage device or an external image display device. When receiving the second command signal, the video processing module 58 outputs the second image signal to the external image storage device or image display device. When receiving the third command signal, the video processing module 58 outputs the third image signal to the external image storage device or image display device.

In the disclosure, the first decoding module, the second decoding module, and the third decoding module can be, for example, a high-definition digital signal decoder, a high-definition analog signal decoder, a standard-definition analog signal decoder, a transport video interface (TVI) decoder, or a composite video interface (CVI) decoder. In an exemplary embodiment, a high-definition digital signal decoder and a high-definition analog signal decoder are chosen as the first and second decoding modules. In another exemplary embodiment, a high-definition digital signal decoder, a high-definition analog signal decoder, and a TVI decoder are chosen as the first, second and third decoding modules.

In view of the one or more aforementioned embodiments, after receiving a video signal, the digital video recorder simultaneously sends the video signal to multiple decoding modules each having its own signal format, and these decoding modules simultaneously decode the video signal. Since the decoding modules can automatically determine whether the video signal is decoded correctly, and generates the command signal presenting the correct decoding or outputs only the image signal under the correct decoding, the digital video recorder can successfully decode the video signal without trial and error. Moreover, the image receiving module can directly connect to the first decoding module and the second decoding module without any switches, and the first decoding module and the second decoding module can also connect to the video processing module without switches. Therefore, the circuit of the digital video recorder may be simplified, the cost during the manufacture may reduce, and signals may be prevented from interference.

## Claims

1. A digital video recording and playback method, **characterized by** comprising steps of:
decoding a video signal into a first image signal by a first format, and generating a first command signal when the first image signal is correct;
decoding the video signal into a second image signal by a second format, and generating a second command signal when the second image signal is correct; and
selectively outputting the first image signal or the second image signal according to the first command signal or the second command signal.

2. The digital video recording and playback method according to claim 1, wherein the step of decoding the video signal into the first image signal by the first format, and generating the first command signal when the first image signal is correct comprises:
decoding the video signal into the first image signal; and
determining whether the first image signal is correct;
generating the first command signal when the first image signal is correct.

3. A digital video recording and playback method, **characterized by** comprising steps of:
decoding a video signal by a first format, and generating a first image signal when the video signal is decoded correctly;
decoding the video signal by a second format, and generating a second image signal when the video signal is decoded correctly; and
outputting the first image signal or the second image signal.

4. The digital video recording and playback method according to claim 3, wherein the step of decoding the video signal by the first format, and generating the first image signal when the video signal is decoded correctly comprises:
decoding the video signal by the first format; and
determining whether the video signal is decoded correctly;
generating the first image signal when the video signal is correctly decoded by the first format; and
stopping decoding the video signal by the first format when the video signal is incorrectly decoded by the first format.

5. A digital video recorder, **characterized by** comprising:
a first decoding module (12), for decoding a video signal into a first image signal by a first format, and generating a first command signal when the first image signal is correct;
a second decoding module (14), for decoding the video signal into a second image signal by a second format, and generating a second command signal when the second image signal is correct; and
a video processing module (16), for receiving the first image signal and the second image signal and selectively outputting the first image signal or the second image signal according to the first command signal or the second command signal.

6. The digital video recorder according to claim 5, wherein the first decoding module (12) comprises a first signal detection unit for determining whether the first image signal is correct, and generating the first command signal when the first image signal is correct.

7. The digital video recorder according to claim 5, wherein the second decoding module (14) comprises a second signal detection unit for determining whether the second image signal is correct, and generating the second command signal when the second image signal is correct.

8. A digital video recorder, **characterized by** comprising:
a first decoding module (32) for decoding a video signal by a first format, and generating a first image signal when the video signal is decoded correctly;
a second decoding module (34) for decoding the video signal by a second format, and generating a second image signal when the video signal is decoded correctly; and
a video processing module (36) coupled with the first decoding module (32) and the second decoding module (34), for receiving and outputting the first image signal or the second image signal.

9. The digital video recorder according to claim 8, wherein the first decoding module (32) comprises a first signal detection unit for determining whether the video signal is decoded correctly; when the video signal is correctly decoded by the first format, the first decoding module (32) generates the first image signal; and when the video signal is incorrectly decoded by the first format, the first decoding module (32) stops decoding the video signal by the first format.

10. The digital video recorder according to claim 8, wherein the second decoding module (34) comprises a second signal detection unit for determining whether the video signal is decoded correctly; when the video signal is decoded correctly by the second format, the second decoding module (34) generates the second image signal; and when the video signal is incorrectly decoded by the second format, the second decoding module (34) stops decoding the second format by the video signal.

## Amended claims

### Amended claims in accordance with Rule 137(2) EPC.

1. A digital video recording and playback method comprising the steps of:
- processing a video signal into a first image signal by a first format, and generating a first command signal when the first image signal is correct;
- processing the video signal into a second image signal by a second format, and generating a second command signal when the second image signal is correct, and
- selectively outputting the first image signal or the second image signal according to the first command signal or the second command signal ; when the first command signal or the second command signal is received ,
being the method **characterized by** comprising the step of:
- outputting an error message when neither the first command signal nor the second command signal is received.

2. The digital video recording and playback method according to claim 1, wherein the step of processing the video signal into the first image signal by the first format, and generating the first command signal when the first image signal is correct comprises:
- processing the video signal into the first image signal;
- determining whether the first image signal is correct; and
- generating the first command signal when the first image signal is correct.

3. The digital video recording and playback method of claim 1, wherein:
- the first command signal is a first image signal ,
- the second command signal is a second image; and
the method comprises outputting the first image signal or the second image signal when either the first image signal or the second image signal is generated; and outputting an error message when neither the first image signal nor the second image signal is generated outputting the first image signal or the second image signal.

4. The digital video recording and playback method according to claim 1, wherein the step of processing the video signal by the first format, and generating the first image signal when the video signal is decoded correctly comprises:
processing the video signal by the first format; and
determining whether the video signal is decoded correctly;
generating the first image signal when the video signal is correctly decoded by the first format; and
stopping processing the video signal by the first format when the video signal is incorrectly decoded by the first format.

5. A digital video recorder, **characterized by** comprising:
a first processing module (12, 32), for processing a video signal into a first image signal by a first format, and generating a first command signal when the first image signal is correct;
a second processing module (14, 34), for processing the video signal into a second image signal by a second format, and generating a second command signal when the second image signal is correct;
a video processing module (16, 36), for receiving the first image signal and the second image signal and selectively outputting the first image signal or the second image signal according to the first command signal or the second command signal, and for outputting an error message when neither the first command signal nor the second command signal is received.

6. The digital video recorder according to claim 5, wherein the first processing module (12) comprises a first signal detection unit for determining whether the first image signal is correct, and generating the first command signal when the first image signal is correct.

7. The digital video recorder according to claim 5, wherein the second processing module (14) comprises a second signal detection unit for determining whether the second image signal is correct, and generating the second command signal when the second image signal is correct.

8. The digital video recorder of claim 1, wherein:
- the first command signal is a first image signal ,
- the second command signal is a second image,
- the video processing module (36) is coupled with the first processing module (32) and the second processing module (34), for receiving and outputting the first image signal or the second image signal and for outputting an error message when neither the first image signal nor the second image signal is received.

9. The digital video recorder according to claim 8, wherein the first processing module (32) comprises a first signal detection unit for determining whether the video signal is decoded correctly; when the video signal is correctly decoded by the first format, the first processing module (32) generates the first image signal; and when the video signal is incorrectly decoded by the first format, the first processing module (32) stops processing the video signal by the first format.

10. The digital video recorder according to claim 8, wherein the second processing module (34) comprises a second signal detection unit for determining whether the video signal is decoded correctly; when the video signal is decoded correctly by the second format, the second processing module (34) generates the second image signal; and when the video signal is incorrectly decoded by the second format, the second processing module (34) stops processing the second format by the video signal.
